# FASCICULE DE BREVET EUROPEEN

(11) **EP 2 475 532 B1**
(45) Date de publication et mention de la délivrance du brevet: **30.04.2014**
(21) Numéro de dépôt: 10770548.5
(22) Date de dépôt: 10.09.2010
(51) Int. Cl.: B62D 21/11, B60B 35/00, B60B 35/04, B62D 27/02

(54) **STRUCTURE TUBULAIRE POUR REALISER NOTAMMENT UN ESSIEU DE TRAIN ROULANT DE VEHICULE AUTOMOBILE**
ROHRSTRUKTUR, INSBESONDERE UM EINE FAHRZEUGACHSE EINES KRAFTFAHRZUEGS ZU BILDEN
TUBULAR STRUCTURE FOR FORMING ESPECIALLY AN AXLE OF THE RUNNING GEAR OF A MOTOR VEHICLE

(30) Priorité: 11.09.2009 FR 0956275
(43) Date de publication de la demande: 18.07.2012
(73) Titulaire: Peugeot Citroën Automobiles SA, 78140 Vélizy-Villacoublay (FR)
(72) Inventeur: CAZENAVE, Christophe, F-91310 Leuville Sur Orge (FR); LE GOURVELLEC, François, F-78120 Rambouillet (FR)
(86) Numéro de dépôt international: PCT/FR2010/051892
(87) Numéro de publication internationale: WO 2011/030074

(56) Documents cités:
- EP-A1- 1 671 821
- EP-A1- 1 787 833
- DE-A1- 19 808 172
- DE-A1- 19 910 575
- JP-A- 2000 318 420

## Description

La présente invention se rapport à une liaison entre deux éléments tubulaires constituant une structure tubulaire.

Elle concerne principalement une structure tubulaire constituée d'un premier élément tubulaire, d'un second élément tubulaire et d'une pièce de liaison solidarisant les deux éléments tubulaires, la solidarisation de ces différents éléments se faisant par soudage.

Le document US4660345 présente un tel assemblage tubulaire avec une pièce de liaison assemblant par soudage deux éléments tubulaires. En particulier à la figure 24 sont visibles les cordons de soudures de cet assemblage. Les cordons de soudure sont positionnés sensiblement suivant des lignes radiales parcourant la surface périphériques des éléments tubulaires à assembler. Lors de l'application de telles soudures, un échauffement se crée le long de ces lignes, créant une dilatation radiale du tube. Lors du refroidissant de la pièce, les effets de la dilatation risque de laisser sur le tube une courbure résiduelle. Cette courbure résiduelle est d'autant difficile à modéliser qu'elle est dépendante de la structure moléculaire du tube, rarement homogène. Ce risque est encore plus critique lorsque les lignes de soudure ne parcourent pas l'ensemble de la surface périphérique du tube, dilatant une partie du tube et ne dilatant pas l'autre partie, créant des contraintes résiduelles à la jonction entre ces deux la partie.

Le document DE-A1-198 08 172 présente une structure tubulaire qui constitue une partie d'un essieu de véhicule automobile selon le préambule de la revendication 1. L'essieu comporte un élément tubulaire et une traverse solidarisée à l'élément tubulaire par soudure. La traverse est soudée sur l'élément tubulaire par au moins un cordon de soudure qui s'étend suivant une ligne génératrice de cet élément tubulaire. Un tel assemblage présente un problème de précision du positionnement de l'élément tubulaire par rapport à la traverse, risquant de créer des variations dé géométrie de l'essieu ainsi obtenu.

L'objet de l'invention consiste à proposer un assemblage par soudage de deux éléments tubulaires par l'intermédiaire d'une pièce de liaison, permettant de prévenir l'apparition de courbures après soudure des éléments tubulaires lors de l'assemblage de cette structure tubulaire et présentant une grande précision de positionnement de deux éléments tubulaires.

A cet effet, l'invention a pour objet une structure tubulaire, pouvant constituer une partie d'un essieu de véhicule automobile, conformément à l'objet de la revendication 1.

Suivant un mode de réalisation préférentiel, l'extrémité du second élément tubulaire est en regard du premier élément tubulaire, l'axe de l'extrémité du second élément tubulaire étant sensiblement dans le même plan que l'axe du premier élément tubulaire. Les extrémités des deux éléments tubulaires présentent une section droite circulaire. La première partie de la pièce de liaison présente une section en forme générale de V ou de U, les extrémités des deux branches du U ou du V définissant les lignes de contact entre la pièce de liaison et l'extrémité du second élément tubulaire, lesdits cordons de soudure étant réalisés suivant ces lignes de contact. L'écartement entre les extrémités desdites branches est inférieur ou égal au diamètre extérieur de ladite extrémité circulaire du second élément tubulaire. La seconde partie de la pièce de liaison est conformée pour présenter une forme sensiblement plane dont la partie extrême présente un bord rectiligne, ledit bord rectiligne définissant une ligne de contact entre la pièce de liaison et le premier élément tubulaire, ledit cordon de soudure étant réalisé suivant cette ligne de contact. La pièce de liaison comporte un trou d'indexage permettant de positionner ladite pièce de liaison par rapport à un point de référence appartenant au premier élément tubulaire lors de l'assemblage par soudage de la pièce de liaison sur le premier élément tubulaire.

Toujours suivant un mode de réalisation préférentiel, la pièce de liaison est composée de deux demi-coquilles positionnées diamétralement de part et d'autre du second élément tubulaire, les bords rectilignes des secondes parties des deux demi-coquilles prenant en sandwich le premier élément tubulaire. Le second élément tubulaire comporte aussi un trou d'indexage permettant de positionner ledit second élément tubulaire suivant un point de référence appartenant au premier élément tubulaire ou par rapport à un des trous d'indexations d'une des deux demi-coquilles.

La présente invention concerne aussi un procédé d'assemblage d'une structure tubulaire comportant les caractéristiques précédentes, comportant :
- une première étape consistant à positionner les secondes parties des deux demi-coquilles diamétralement de part et d'autre du premier élément tubulaire au moyen d'un outil de pré-maintient se positionnant par rapport à un point de référence appartenant audit premier élément tubulaire, ledit outil comportant deux doigts pénétrant dans les trous d'indexage desdites demi-coquilles,
- une deuxième étape consistant à souder des cordons de soudure suivant les lignes de contact des deux demi-coquilles sur le premier élément tubulaire, lesdites lignes de contact s'étendant suivant des lignes génératrices dudit premier élément tubulaire,
- une troisième étape consistant à positionner l'extrémité du second élément tubulaire entre les premières parties des deux demi-coquilles par rapport à un point de référence appartenant au premier élément tubulaire ou par rapport à un des trous d'indexage d'une des demi-coquilles, en utilisant un outil comportant un doigt pénétrant dans le trou d'indexage du second élément tubulaire,
- une quatrième étape consistant à serrer les deux demi-coquilles contre le second élément tubulaire, et
- une cinquième étape consistant à souder les deux demi-coquilles sur le second élément tubulaire, suivant les lignes de contact des deux demi-coquilles, lesdites lignes de contact s'étendant suivant des lignes génératrices dudit second élément tubulaire.

L'invention concerne aussi un essieu d'un train de véhicule automobile comportant une partie centrale formée par une structure tubulaire comportant au moins une des caractéristiques précédentes.

D'autres avantages et caractéristiques techniques de la présente invention apparaîtront plus clairement à la lumière de la description qui suit en référence aux figures des dessins annexés parmi lesquelles :
- La figure 1 représente une vue partielle en perspective, d'un train arrière d'un véhicule automobile comportant un essieu suivant l'invention ;
- La figure 2 représente une vue en perspective de l'essieu suivant l'invention ; et
- Les figures 3 et 4 représentent des vues de détails de cet essieu.

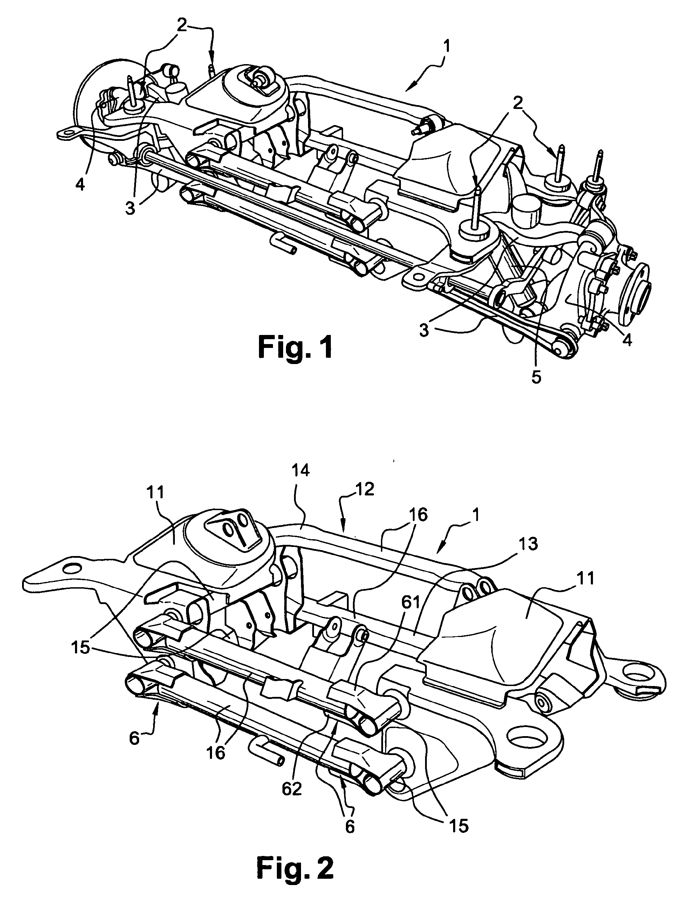

La figure 1 représente une vue partielle, en perspective, d'un train arrière d'un véhicule automobile. Ce train arrière comporte un essieu 1, suivant l'invention, fixé à la structure du véhicule (non représentée) par l'intermédiaire de plusieurs ensembles de fixation 2. Ces ensembles de fixation 2 sont constitués de vis de fixation positionnées dans des cales viscoélastiques. L'essieu arrière 1 sert de support à différents ensembles de bras de suspension 3 positionnés symétriquement de part et d'autre de cet essieu 1. Chaque ensemble de bras 3 soutient un porte-moyeu 4 sur lequel est fixée une roue (non représentée). Des ensembles ressorts amortisseurs 5 sont positionnés de part et d'autre de cet essieu 1, comportant une première extrémité solidaire de l'essieu 1 et une seconde extrémité solidaire de chaque porte moyeu 4.

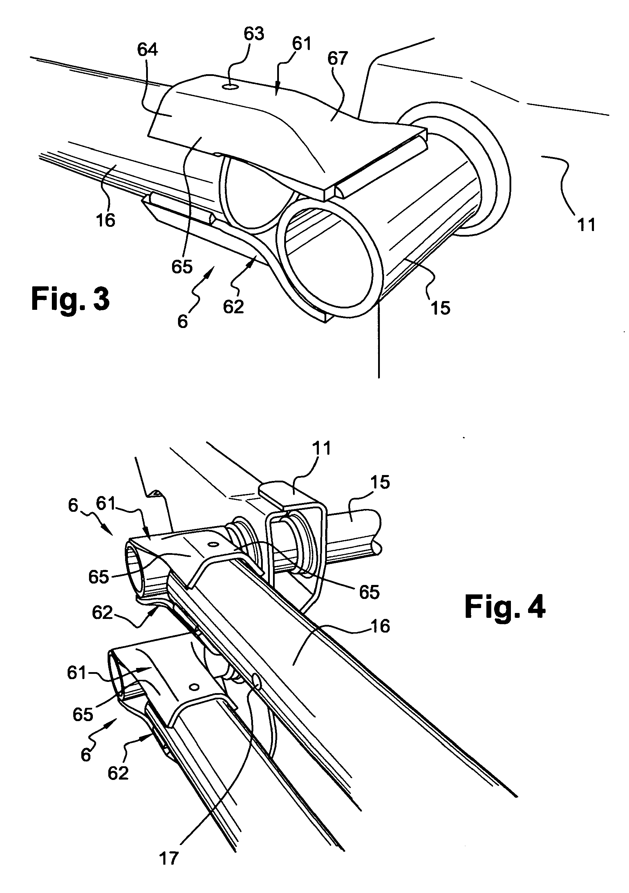

Les figures 2 à 4 représentent une vue en perspective de l'essieu 1 et des vues de détails de cet essieu 1. L'essieu 1 comporte deux parties latérales 11 positionnées symétriquement de part et d'autre d'une partie centrale 12 constituée d'un ensemble tubulaire. Chacune des deux parties latérales 11 sont formées de différentes pièces en tôle embouties présentant des formes adaptées pour permettre le montage des ensembles de fixation 2 et des bras de suspension 3 (représentés en figure 1). La partie centrale 12, du type « mécanosoudée », est composée d'un premier cadre tubulaires 13 et d'un second cadre tubulaire 14, avec le second cadre tubulaire 14 sensiblement alignée au-dessus du premier cadre tubulaire 13. Chacun de ces deux cadres tubulaires 13 et 14 étant formés de deux tubes 15, alignés sensiblement dans sens longitudinale du véhicule, et de deux tubes 16, alignés sensiblement dans le sens transversal du véhicule. Chaque extrémité de chaque tube transversaux 16 vient se raccorder à l'extrémité d'un des tubes longitudinaux 15 par l'intermédiaire de pièces de liaison 6.

Les tubes transversaux 16 comportent à chaque extrémité une partie cylindrique permettant la fixation des pièces de liaison 6 et une partie centrale non forcément linéaire, dont les éventuelles courbures permettent de s'adapter à l'environnement dans lequel est positionné l'essieu 1. Les tubes transversaux 16 comportent des trous d'indexage 17 permettant, comme qu'expliqué ultérieurement, leurs positionnements lors de l'assemblage de l'essieu 1.

Les tubes longitudinaux 15 présente une forme cylindrique de diamètre constant, permettant aux tubes longitudinaux 15 d'être emmanchés dans des ouvertures cylindriques positionnés dans les parties latérales 11, solidarisant les deux parties latérales 11 à la partie centrale tubulaire 12, formant l'essieu 1.

Les pièces de liaison 6 sont formées d'une demi-coquille supérieure 61 et d'une demi-coquille inférieure 62, positionnées en regard l'une de l'autre, venant encadrer chacune des liaisons entre les tubes transversaux 16 et les tubes longitudinaux 15. Les demi-coquilles inférieure 61 et supérieure 62 peuvent soit être identiques, soit comporter des différences de géométrie, par exemple dans le cas où les axes des extrémités des tubes longitudinaux 15 et des tubes transversaux 16 ne sont pas dans un même plan. Les demi-coquilles inférieure 61 ou supérieure 62 comportent une première partie 64 de section constante présentant une section transversale en forme générale de V ou de U, la section en forme de U étant de préférence évasé : Les deux branches planes 65 ainsi formées, forment un angle ouvert constant. Entre ces deux branches 65 est positionné un trou d'indexage 63, dont l'utilité sera expliquée ultérieurement. Cette première partie 64 est prolongée par une seconde partie 67 s'aplatissant progressivement jusqu'à présenter une section droite dont le bord extrême est positionné perpendiculairement aux deux bords parallèles des deux branches 65. Le bord extrême de la seconde partie 67 sert de surface de contact entre les demi-coquilles 61 ou 62 et les tubes longitudinaux 15.

Avantageusement pour l'assemblage de l'essieu 1, les deux parties latérales 11, formées de plusieurs éléments en tôle, sont assemblées sur un bâti formant un gabarit de soudage. Du respect de la géométrie de ces deux parties latérales 11 dépend le respect de la géométrie finale de l'essieu 1.

Sur chacune des deux parties latérales 11 sont assemblées les deux tubes longitudinaux 15 qui serviront de support aux tubes transversaux 16 formant les cadres inférieur 13 et supérieur 14. Ces tubes longitudinaux 15 sont emmanchés dans des ouvertures circulaires formées dans les parties latérales 11, des cordons de soudures venant solidariser l'ensemble. Ces cordons de soudures parcourent ainsi les lignes de jonction entre les bords des ouvertures circulaires des parties latérales 11 et la surface périphérique des tubes longitudinaux 15, créant une dilatation axiale de ces tubes longitudinaux 15 qui après refroidissement ne permet plus de garantir la géométrie axiale de ces tubes longitudinaux 15.

Une fois ces tubes longitudinaux 15 fixés, les demi-coquilles inférieures 61 et supérieures 62 sont assemblées par soudage à proximité des extrémités de ces tubes longitudinaux 15. Les demi-coquilles inférieures 61 et supérieures 62 sont positionnées de part et d'autre de ces tubes longitudinaux 15, les prenant symétriquement en sandwich, suivant deux positions diamétralement opposées. Pour ce faire les demi-coquilles inférieures 61 et supérieures 62 sont pré-maintenues en position par un outil (non représenté) le temps de l'opération de soudage. L'outil de pré-maintient comporte des doigts de positionnement venant pénétrer dans les trous d'indexage 63 des demi-coquilles inférieures 61 et supérieures 62, permettant de positionner ces demi-coquilles 61 et 62 par rapport à des points de références appartenant aux parties latérale 11. Comme vu précédemment, ce positionnement ne peut se faire par rapport aux tubes longitudinaux 15 dont la géométrie axiale n'est plus fiable. Des cordons de soudures sont formés le long des lignes de contact entre les bords extrêmes des secondes parties 67 des demi-coquilles inférieures 61 et supérieures 62 et les surfaces latérales des tubes longitudinaux 15. Ces cordons de soudures sont réalisés suivant des lignes génératrices des tubes longitudinaux 15, limitant les effets de dilatation de ces tubes, permettant une fois la soudure refroidie de conserver le positionnement des demi-coquilles inférieures 61 et supérieures 62 par rapport aux points de référence appartenant aux parties latérale 11.

Les demi-coquilles inférieures 61 et supérieures 62 une fois fixées symétriquement à proximité de chaque extrémité des tubes longitudinaux 15, forment des supports permettant le positionnement des extrémités cylindriques des tubes transversaux 16. Les trous d'indexage 17 des tubes longitudinaux 16 permettent de les maintenir en position le temps que les demi-coquilles inférieures 61 et supérieures 62 soient légèrement serrées autour des extrémités cylindriques de ces tubes longitudinaux 16. Les demi-coquilles inférieures 61 et supérieures 62, qui présentent une certaine souplesse de positionnement, peuvent facilement s'adapter à différents diamètres de tubes. Ce serrage permet un pré-maintient le temps que des cordons de soudures soient appliqués le long des lignes de contacts entre les demi-coquilles inférieures 61 et supérieures 62 et les surfaces périphériques des extrémités des tubes transversaux 16. Comme précédemment, les soudures se faisant le long de lignes génératrices des extrémités des tubes transversaux 16, la déformation suivant l'alignement axial des extrémités de ces tubes transversaux 16 est de ce fait négligeable. Une fois les soudures refroidis, la géométrie et le positionnement des tubes transversaux 16 sont ainsi conservés, garantissant la géométrie finale de l'essieu 1 ainsi formé.

Chacune demi-coquille supérieure 61 ou inférieur 62 présente l'avantage d'être formée à partir d'une simple plaque de métal embouti, avec une assez large tolérance dans la variation de l'angle formé entre les branches 65 du V ou du U. Le diamètre des extrémités cylindriques des tubes transversaux 16, tout en restant dans une plage de dimension raisonnable, peut varier. Pour permettre que des cordons de soudures puissent être formés le long des lignes de contact entre les bords des branches 65 des premières parties 64 des demi-coquilles inférieures 61 et supérieures 62 et les surfaces latérales des extrémités des tubes transversaux 16, suivant des lignes génératrices de ces tubes, le diamètre extérieur de ces tubes transversaux 16 doit rester supérieur à l'écartement des deux bords parallèles des deux branches 65 des demi-coquilles supérieures 61 ou inférieurs 62.

Il est aussi possible tout en conservant des tubes transversales 16 identiques de modifier, dans une certaine mesure, l'espacement entre les tubes longitudinaux 15 et les tubes transversaux 16, modifiant la largeur de l'essieu 1. Un tel écartement est rendu possible par le fait qu'il n'est pas nécessaire que les tubes transversaux 16 viennent au contact des tubes longitudinaux 15 pour permettre leurs assemblages. L'espacement ainsi présent pouvant varier sans fragiliser le montage.

L'essieu 1 ainsi formé par cet ensemble tubulaire présente un important volume intérieur libre, délimité par les deux parties latérales 11 et les deux cadre 13 et 14, permettant le montage d'un différentiel arrière dans le cas, par exemple, d'un véhicule de type quatre roues motrices ou d'un moteur électrique pour une application à un véhicule hybride ou électrique.

Il est bien entendu que l'invention n'est pas limitée au mode de réalisation qui a été décrit, mais est susceptible de recevoir de nombreuses modifications qui apparaîtront à l'homme du métier.

## Revendications

1. Structure tubulaire (1), pouvant constituer une partie d'un essieu de véhicule automobile, comportant au moins un premier élément tubulaire (15), au moins un second élément tubulaire (16) et une pièce de liaison (61, 62) solidarisant les premier et second éléments tubulaires (15 , 16) par soudure, la pièce de liaison (61, 62) comportant une première partie (64) soudée sur le second élément de liaison (16) par au moins un cordon de soudure s'étendant suivant une ligne génératrice du second éléments tubulaires (16) et une seconde partie (67) soudée sur le premier élément de liaison (15) par au moins un cordon de soudure s'étendant suivant une ligne génératrice du premier éléments tubulaires (15), **caractérisée en ce que** la pièce de liaison (61, 62) comporte un trou d'indexage (63) permettant de positionner la pièce de liaison (61, 62) par rapport à un point de référence appartenant au premier élément tubulaire (15) lors de l'assemblage par soudage de la pièce de liaison (61, 62) sur le premier élément tubulaire (15).

2. Structure tubulaire (1) selon la revendication 1, **caractérisée en ce que** l'extrémité du second élément tubulaire (16) est en regard du premier élément tubulaire (15), l'axe de l'extrémité du second élément tubulaire (16) étant sensiblement dans le même plan que l'axe du premier élément tubulaire (15).

3. Structure tubulaire (1) selon la revendication 2, **caractérisée en ce que** les extrémités des deux éléments tubulaires (15, 16) ont une section droite circulaire.

4. Structure tubulaire (1) selon la revendication 3, **caractérisée en ce que** la première partie (64) de la pièce de liaison (61, 62) présente une section transversale en forme générale de V ou de U, les extrémités des deux branches (65) du U ou du V définissant des lignes de contact entre la pièce de liaison (61, 62) et l'extrémité du second élément tubulaire (16), lesdits cordons de soudure étant réalisés suivant ces lignes de contact.

5. Structure tubulaire (1) selon la revendication 4, **caractérisée en ce que** l'écartement entre les extrémités desdites branches (65) est inférieur ou égal au diamètre extérieur de ladite extrémité circulaire du second élément tubulaire (16).

6. Structure tubulaire (1) selon l'une quelconque des revendications précédentes, **caractérisée en ce que** la seconde partie (67) de la pièce de liaison (61, 62) est conformée pour présenter une forme sensiblement plane dont la partie extrême présente un bord rectiligne, ledit bord rectiligne définissant une ligne de contact entre la pièce de liaison (61, 62) et le premier élément tubulaire (15), ledit cordon de soudure étant réalisé suivant cette ligne de contact.

7. Structure tubulaire (1) selon l'une quelconque des revendications précédentes, **caractérisée en ce que** la pièce de liaison (61, 62) est composée de deux demi-coquilles (61, 62) positionnées diamétralement de part et d'autre du second élément tubulaire (16), les bords rectilignes des secondes parties (67) des deux demi-coquilles (61, 62) prenant en sandwich le premier élément tubulaire (15).

8. Structure tubulaire (1) selon la revendications 7, **caractérisée en ce que** le second élément tubulaire (16) comporte un trou d'indexage (17) permettant de positionner ledit second élément tubulaire (16) suivant un point de référence appartenant au premier élément tubulaire (15) ou par rapport à un des trous d'indexations (63) d'une des deux demi-coquilles (61, 62).

9. Procédé d'assemblage d'une structure tubulaire selon la revendication 8, **caractérisé en ce qu'**il comporte :
• une première étape consistant à positionner les secondes parties (67) des deux demi-coquilles (61, 62) diamétralement de part et d'autre du premier élément tubulaire (15) au moyen d'un outil de pré-maintient se positionnant par rapport à un point de référence appartenant audit premier élément tubulaire (15), ledit outil comportant deux doigts pénétrant dans les trous d'indexage (63) desdites demi-coquilles (61, 62),
• une deuxième étape consistant à souder des cordons de soudure suivant les lignes de contact des deux demi-coquilles (61, 62) sur le premier élément tubulaire (15), lesdites lignes de contact s'étendant suivant des lignes génératrices dudit premier élément tubulaire (15),
• une troisième étape consistant à positionner l'extrémité du second élément tubulaire (16) entre les premières parties (64) des deux demi-coquilles (61, 62) par rapport à un point de référence appartenant au premier élément tubulaire (15) ou par rapport à un des trous d'indexage (63) d'une des demi-coquilles (61, 62), en utilisant un outil comportant un doigt pénétrant dans le trou d'indexage (17) du second élément tubulaire (16),
• une quatrième étape consistant à serrer les deux demi-coquilles (61, 62) contre le second élément tubulaire (16), et
• une cinquième étape consistant à souder les deux demi-coquilles (61, 62) sur le second élément tubulaire (16), suivant les lignes de contact des deux demi-coquilles (61, 62) ; lesdites lignes de contact s'étendant suivant des lignes génératrices dudit second élément tubulaire (16).

10. Essieu (1) d'un train roulant de véhicule automobile comportant une partie centrale formée par une structure tubulaire (1) suivant les revendications 1 à 8.

## Patentansprüche

1. Rohrförmige Struktur (1), die einen Teil einer Achse eines Kraftfahrzeugs darstellen kann, umfassend mindestens ein erstes rohrförmiges Element (15), mindestens ein zweites rohrförmiges Element (16) und ein Verbindungsstück (61, 62), das das erste und das zweite rohrförmige Element (15, 16) durch Schweißung fest miteinander verbindet, wobei das Verbindungsstück (61, 62) einen ersten Teil (64) umfasst, der auf dem zweiten Verbindungselement (16) durch mindestens eine Schweißnaht geschweißt ist, die sich entlang einer Erzeugungslinie des zweiten rohrförmigen Elements (16) erstreckt, und einen zweiten Teil (67), der auf dem ersten Verbindungselement (15) durch mindestens eine Schweißnaht geschweißt ist, die sich entlang einer Erzeugungslinie des ersten rohrförmigen Elements (15) erstreckt, **dadurch gekennzeichnet, dass** das Verbindungsstück (61, 62) ein Indexierungsloch (63) aufweist, das ermöglicht, das Verbindungsstück (61, 62) mit Bezug auf einen Referenzpunkt der zum ersten rohrförmigen Element (15) gehört, bei der Montage durch Schweißung des Verbindungsstücks (61, 62) auf dem ersten rohrförmigen Element (15) zu positionieren,

2. Rohrförmige Struktur (1) nach Anspruch 1, **dadurch gekennzeichnet, dass** das Ende des zweiten rohrförmigen Elements (16) gegenüber dem ersten rohrförmigen Element (15) liegt, wobei die Achse des Endes des zweiten rohrförmigen Elements (16) im Wesentlichen in der gleichen Ebene wie die Achse des ersten rohrförmigen Elements (15) liegt.

3. Rohrförmige Struktur (1) nach Anspruch 2, **dadurch gekennzeichnet, dass** die Enden der zwei rohrförmigen Elemente (15, 16) einen ringförmigen geraden Abschnitt aufweisen.

4. Rohrförmige Struktur (1) nach Anspruch 3, **dadurch gekennzeichnet, dass** der erste Teil (64) des Verbindungsstücks (61, 62) einen Querschnitt in der allgemeinen Form eines V oder eines U aufweist, wobei die Enden der zwei Schenkel (65) des U oder des V Kontaktlinien zwischen dem Verbindungsstück (61, 62) und dem Ende des zweiten rohrförmigen Elements (16) definieren, wobei die Schweißnähte entlang dieser Kontaktlinien durchgeführt sind.

5. Rohrförmige Struktur (1) nach Anspruch 4, **dadurch gekennzeichnet, dass** der Abstand zwischen den Enden der Schenkel (65) geringer oder gleich dem äußeren Durchmesser des ringförmigen Endes des zweiten rohrförmigen Elements (16) ist.

6. Rohrförmige Struktur (1) nach einem der vorhergehenden Ansprüche, **dadurch gekennzeichnet, dass** der zweite Teil (67) des Verbindungsstücks (61, 62) angepasst ist, um eine im Wesentlichen ebene Form aufzuweisen, deren äußerer Teil einen geradlinigen Rand aufweist, wobei der geradlinige Rand eine Kontaktlinie zwischen dem Verbindungsstück (61, 62) und dem ersten rohrförmigen Element (15) aufweist, wobei die Schweißnaht entlang dieser Kontaktlinie durchgeführt ist.

7. Rohrförmige Struktur (1) nach einem der vorhergehenden Ansprüche, **dadurch gekennzeichnet, dass** das Verbindungsstück (61, 62) aus zwei Halbschalen (61, 62) zusammengesetzt ist, die diametral auf beiden Seiten des zweiten rohrförmigen Elements (16) positioniert sind, wobei die geradlinigen Ränder der zweiten Teile (67) der zwei Halbschalen (61, 62) das erste rohrförmige Element (15) zwischen sich einklemmen.

8. Rohrförmige Struktur (1) nach Anspruch 7, **dadurch gekennzeichnet, dass** das zweite rohrförmige Element (16) ein Indexierungsloch (17) aufweist, das ermöglicht, das zweite rohrförmige Element (16) gemäß einem Referenzpunkt zu positionieren, der zum ersten rohrförmigen Element (15) gehört, oder mit Bezug auf eines der Indexierungslöcher (63) einer der zwei Halbschalen (61, 62).

9. Verfahren zur Montage einer rohrförmigen Struktur nach Anspruch 8, **dadurch gekennzeichnet, dass** es Folgendes umfasst:
• einen ersten Schritt, der darin besteht, die zweiten Teile (67) der zwei Halbschalen (61, 62) diametral auf beiden Seite des zweiten rohrförmigen Elements (15) mit Hilfe eines Vor-Halte-Werkzeugs zu positionieren, das sich mit Bezug auf einen Referenzpunkt anordnet, der zum ersten rohrförmigen Element (15) gehört, wobei das Werkzeug zwei Finger umfasst, die in die Indexierungslöcher (63) der Halbschalen (61, 62) eindringen,
• einen zweiten Schritt, der darin besteht, Schweißnähte entlang den Kontaktlinien der zwei Halbschalen (61, 62) auf dem ersten rohrförmigen Element (15) zu schweißen, wobei sich die Kontaktlinien entlang der Erzeugungslinien des ersten rohrförmigen Elements (15) erstrecken
• einen dritten Schritt, der darin besteht, das Ende des zweiten rohrförmigen Elements (16) zwischen die ersten Teile (64) der zwei Halbschalen (61, 62) mit Bezug auf einen Referenzpunkt zu positionieren, der zum ersten rohrförmigen Element (15) gehört, oder mit Bezug auf eines der Indexierungslöcher (63) einer der Halbschalen (61, 62) unter Verwendung eines Werkzeugs, das zwei Finger umfasst, die in das Indexierungsloch (17) des zweiten rohrförmigen Elements (16) eindringen,
• einen vierten Schritt, der darin besteht, die zwei Halbschalen (61, 62) gegen das zweite rohrförmige Element (16) zu klemmen, und
• einen fünften Schritt, der darin besteht, die zwei Halbschalen (61, 62) auf das zweite rohrförmige Element (16) entlang den Kontaktlinien der zwei Halbschalen (61, 62) zu schweißen; wobei sich die Kontaktlinien entlang der Erzeugungslinien des zweiten rohrförmigen Elements (16) erstrecken.

10. Achse (1) eines Fahrwerks eines Kraftfahrzeugs, umfassend einen zentralen Teil, der von einer rohrförmigen Struktur (1) nach Anspruch 1 bis 8 gebildet ist.

## Claims

1. A tubular structure (1) that can form part of a motor vehicle axle, comprising at least one first tubular element (15), at least one second tubular element (16) and a connecting part (61, 62) fixing the first and second tubular elements (15, 16) together by welding, the connecting part (61, 62) comprising a first part (64) welded to the second connecting element (16) by at least one weld bead extending along a line forming the second tubular element (16) and a second part (67) welded to the first connecting element (15) by at least one weld bead extending along a line forming the first tubular element (15), **characterised in that** the connecting part (61, 62) comprises an index hole (63) for positioning the connecting part (61, 62) in relation to a point of reference belonging to the first tubular element (15) during assembly by welding the connecting part (61, 62) to the first tubular element (15).

2. A tubular structure (1) according to claim 1, **characterised in that** the end of the second tubular element (16) is opposite the first tubular element (15), the axis of the end of the second tubular element (16) being substantially along the same plane as the axis of the first tubular element (15).

3. A tubular structure (1) according to claim 2, **characterised in that** the ends of the two tubular elements (15, 16) have a circular cross-section.

4. A tubular structure (1) according to claim 3, **characterised in that** the first part (64) of the connecting part (61, 62) has a general V- or U-shaped cross-section, the ends of the two branches (65) of the U or V defining the lines of contact between the connecting part (61, 62) and the end of the second tubular element (16), said weld beads being produced along these contact lines.

5. A tubular structure (1) according to claim 4, **characterised in that** the gap between the ends of said branches (65) is less than or equal to the outer diameter of said circular end of the second tubular element (16).

6. A tubular structure (1) according to any one of the previous claims, **characterised in that** the second part (67) of the connecting part (61, 62) is adapted to have a substantially planar shape, the end part of which has a rectilinear edge, said rectilinear edge defining a line of contact between the connecting part (61, 62) and the first tubular element (15), said weld bead being produced along this contact line.

7. A tubular structure (1) according to any one of the previous claims, **characterised in that** the connecting part (61, 62) is comprised from two half-shells (61, 62) positioned diametrically on either side of the second tubular element (16), the rectilinear edges of the second parts (67) of the two half-shells (61, 62) sandwiching the first tubular element (15).

8. A tubular structure (1) according to claim 7, **characterised in that** the second tubular element (16) comprises an index hole (17) for positioning said second tubular element (16) along a point of reference belonging to the first tubular element (15) or in relation to one of the index holes (63) of one of the two half-shells (61, 62).

9. A method for assembling a tubular structure according to claim 8, **characterised in that** it comprises:
• a first step consisting in positioning the second parts (67) of the two half-shells (61, 62) diametrically on either side of the first tubular element (15) by means of a pre-maintenance tool, positioned in relation to a point of reference belonging to said first tubular element (15), said tool comprising two fingers penetrating the index holes (63) of said half-shells (61, 62),
• a second step consisting in welding the weld beads along the lines of contact of the two half-shells (61, 62) on the first tubular element (15), said contact lines extending along lines forming said first tubular element (15),
• a third step consisting in positioning the end of the second tubular element (16) between the first parts (64) of the two half-shells (61, 62) in relation to a point of reference belonging to the first tubular element (15) or in relation to one of the index holes (63) of one of the half-shells (61, 62), using a tool comprising a finger penetrating the index hole (17) of the second tubular element (16),
• a fourth step consisting in tightening the two half-shells (61, 62) against the second tubular element (16), and
• a fifth step consisting in welding the two half-shells (61, 62) to the second tubular element (16), along the lines of contact of the two half-shells (61, 62); said contact lines extending along lines forming said second tubular element (16).

10. An axle (1) of the running gear of a motor vehicle comprising a central part formed by a tubular structure (1) according to claims 1 to 8.
